# EUROPÄISCHE PATENTSCHRIFT

(11) **EP 1 570 682 B1**
(45) Veröffentlichungstag und Bekanntmachung des Hinweises auf die Patenterteilung: **07.11.2007**
(21) Anmeldenummer: 03782291.3
(22) Anmeldetag: 03.12.2003
(51) Int. Cl.: H04N 9/31, H04N 5/74, H04N 1/407

(54) **HELLIGKEITS- UND FARBREGELUNG EINES PROJEKTIONSAPPARATES**
BRIGHTNESS AND COLOUR CONTROL OF A PROJECTION APPLIANCE
REGULATION DE LA LUMINOSITE ET DES COULEURS D'UN APPAREIL DE PROJECTION

(30) Priorität: 04.12.2002 DE 10256505; 04.12.2002 DE 10256503
(43) Veröffentlichungstag der Anmeldung: 07.09.2005
(73) Patentinhaber: Barco Control Rooms GmbH, 76229 Karlsruhe (DE)
(72) Erfinder: LANG, Harald, 76149 Karlsruhe (DE); DAMBACH, Sören, 76227 Karlsruhe (DE)
(74) Vertreter: Jany, Peter
(86) Internationale Anmeldenummer: PCT/EP2003/013629
(87) Internationale Veröffentlichungsnummer: WO 2004/052023

(56) Entgegenhaltungen:
- EP-A- 0 757 278
- EP-A- 1 178 672
- WO-A-20/04030372
- US-A1- 2002 085 288
- US-A1- 2002 140 910
- PATENT ABSTRACTS OF JAPAN vol. 1998, no. 09, 31. Juli 1998 (1998-07-31) & JP 10 090645 A (MATSUSHITA ELECTRIC IND CO LTD), 10. April 1998 (1998-04-10)
- PATENT ABSTRACTS OF JAPAN vol. 1998, no. 07, 31. März 1998 (1998-03-31) -& JP 09 203690 A (HUGHES JVC TECHNOL CORP), 5. August 1997 (1997-08-05)

## Beschreibung

Die Erfindung betrifft die Helligkeits- und Farbregelung bei Projektionsapparaten. Projektionsapparate dienen zum Projizieren eines Bildes auf einen Projektionsschirm. Die Erfindung richtet sich auf Projektionsapparate, die einen pixelweise steuerbaren Bildgeber zum Darstellen des Bildes in einem verkleinerten Maßstab, eine Beleuchtungseinheit zum Beleuchten des Bildgebers und eine ein Projektionsobjektiv umfassende Projektionseinrichtung zum vergrößerten Abbilden des von dem Bildgeber dargestellten Bildes auf den Projektionsschirm umfassen, wobei die Beleuchtungseinheit zur Realisierung der zeitsequentiellen additiven Farbmischung ein zeitlich variables Farbfilter - im folgenden dynamisches Farbfilter genannt - zur Erzeugung primärer Farben enthält. In der Regel ist der Bildgeber und/oder die Projektionseinrichtung zum Einstellen der Lage des projizierten Bildes auf dem Projektionsschirm in einer mit Justageelementen einstellbaren Position in oder an dem Projektionsapparat befestigt.

Man unterscheidet zwischen Auflicht- und Rückprojektionsapparaten. Ein Unterschied zwischen Auflichtprojektoren und Rückprojektionssystemen besteht darin, daß in Rückprojektionsapparaten zumeist weitere optische Elemente wie Umlenkspiegel und Projektionsschirme enthalten sind, die in Auflichtprojektoren nicht verwendet werden.

Sowohl Auflicht- als auch Rückprojektionsapparate dienen zum Anzeigen eines Bildes auf einem großflächigen Projektionsschirm. Der Bildgeber kann dabei ein Durchlicht-Bildgeber sein, also ein Bildgeber, der transmissiv von einer Beleuchtungseinrichtung zum Beleuchten des Bildgebers durchleuchtet wird, oder ein reflektierender Bildgeber, der von der Beleuchtungseinrichtung beleuchtet wird. Nach dem Stand der Technik werden beispielsweise Durchlicht-Flüssigkristall-Bildgeber oder auch reflektive Polysilicium- oder Flüssigkristall-Bildgeber oder DMDs (Trademark of Texas Instruments Inc., Digital-Micromirror-Device) verwendet.

Eine Beleuchtungseinheit zum Beleuchten des Bildgebers bzw. Durchleuchten des Durchlicht-Bildgebers umfaßt in der Regel eine Lichtquelle, einen Reflektor und eine Kondensoroptik mit einer oder mehreren Kondensorlinsen zum Ausleuchten des Bildgebers. Auf die Kondensoroptik kann bei Verwendung eines fokussierenden, z.B. elliptischen oder komplexeren Lampenreflektors verzichtet werden. Ferner können zusätzliche Kondensoren oder Lichtdurchmischungseinrichtungen, beispielsweise zum optimalen Ausleuchten eines rechteckigen Bildformates, vorgesehen sein. Die Projektionseinrichtung bzw. die Beleuchtungseinheit ist entweder in den Projektionsapparat integriert oder an diesem angesetzt. Ein Projektionsapparat ist somit eine abgeschlossene, vollständige Einheit zum Darstellen eines Bildes, wobei in einem Rückprojektionsapparat ein Bildschirm zum Betrachten des Bildes integriert ist.

Insbesondere Rückprojektionsmodule finden eine breite Anwendung in Fällen, in denen ein komplexes Bild, beispielsweise bestehend aus verschiedenen Video- oder Computerbildern, großflächig angezeigt werden soll. Verbreitete Einsatzbereiche für solche Rückprojektionsapparate sind Bildwände, die von mehreren Personen gleichzeitig betrachtet werden. Insbesondere in der modernen Leitwartentechnik ist die Großbildrückprojektion verbreitet.

Wenn das angezeigte Bild bei gegebenen Qualitätsanforderungen eine bestimmte Größe und Komplexität überschreiten soll, ist dies nicht mehr mit einem einzigen Rückprojektionsmodul möglich. In solchen Fällen wird das Bild aus Teilbildern, die jeweils von einem Rückprojektionsmodul angezeigt werden, zusammengesetzt. Das jeweils von einem Rückprojektionsmodul angezeigte Bild ist in diesem Fall ein Teilbild des von allen Rückprojektionsmodulen zusammen angezeigten Gesamtbildes der Bildwand.

Nach dem Stand der Technik ist es möglich, eine große Anzahl von Rückprojektionsmodulen in einem modularen Aufbau einer Projektionsbildwand aneinanderzureihen und/oder übereinander zu stapeln, um ein aus vielen einzelnen Teilbildern zusammengesetztes Großbild darzustellen. Die Anzahl der Rückprojektionsmodule, die zu einer Projektionsbildwand zusammengesetzt werden, beträgt bis zu 150 oder mehr.

Weitere Einzelheiten zu Rückprojektionsmodulen sind dem Dokument EP 0 756 720 B1 zu entnehmen, auf das hiermit bezug genommen wird.

Viele kommerziell erhältliche Projektionsapparate, beispielsweise Video-Projektionseinrichtungen, benutzen separate Kanäle für jede der drei Primärfarben. Ein solches System erfordert für jede Primärfarbe einen Bildgeber und optische Strecken, die pixelgenau auf den Schirm konvergieren müssen. Neuartige Projektionsapparate verwenden nur einen Bildgeber auf Basis der zeitsequentiellen additiven Farbmischung, wobei das gesamte Bild in drei einfarbige Teilbilder bezüglich der Grundfarben rot, grün und blau zerlegt wird. Der Bildgeber wird sequentiell mit den Primärfarben beleuchtet. Dabei werden die darzustellenden Bilddaten entsprechend der gerade den Bildgeber erreichenden Farbe an den Bildgeber geleitet. Das Auge fügt die farbigen Teilbilder zu einem einzigen Vollfarbenbild zusammen. Das Auge fügt ebenfalls aufeinanderfolgende Videobilder und Videoteilbilder zu einem Vollbewegungsbild zusammen.

Ein solches System erfordert eine Einrichtung zum sequentiellen Beleuchten des Bildgebers mit primären Farben. Die einfachste Einrichtung eines hierzu geeigneten dynamischen Farbfilters ist ein sich drehendes Farbrad, das dazu dient, die gerade gewünschte Farbe aus dem weißen Spektrum einer Beleuchtungseinheit auszufiltern.

Derartige Farbräder zum Ändern der Farbe des von der Projektionslampe ausgekoppelten Lichtes werden im allgemeinen aus dichroitischen Filtern hergestellt. Die Filter weisen aber herstellungsbedingt Abweichungen in ihrer spektralen Filtercharakteristik auf, die sich darin äußern, daß sich die Kantenlagen der Filter unterscheiden. Infolge dessen gibt es Unterschiede in der Wahrnehmung der Grundfarben sowie der Mischfarben.

Die derzeit im Zusammenhang mit der zeitsequentiellen Bilderzeugung verwendeten Bildgeber sind sogenannte Digital-Micromirror-Devices, die beispielsweise in dem Patent US 5,079,544 beschrieben sind. Sie umfassen eine Anordnung kleiner bewegbarer Spiegel zum Ablenken eines Lichtstrahls entweder zu der Projektionslinse (ein) oder weg von der Projektionslinse (aus). Durch schnelles Ein- und Ausschalten der von den Spiegeln dargestellten Pixel kann eine Grauskala erzielt werden. Die Verwendung von DMDs zum Digitalisieren von Licht ist auch unter der Bezeichnung DLP (Digital Light Processing) bekannt. Ein DLP-Projektionssystem umfaßt eine Lichtquelle, optische Elemente, Farbfilter, eine digitale Steuerung und Formatierung, ein DMD und eine Projektionslinse.

An Projektionsgeräte, insbesondere an modular aus mehreren Projektionsgeräten aufgebaute Bildwände, werden in vielen Fällen hohe Anforderungen gestellt, die aufgrund folgender technischer Ursachen nach dem Stand der Technik nur unzureichend erfüllt werden können:
- Die in den unterschiedlichen Projektionsapparaten verwendeten Lampen, bei denen es sich in vielen Anwendungen um Hochleistungslampen handelt, haben eine unterschiedliche Grundhelligkeit. Dies erfordert einen aufwendigen Abgleich der einzelnen Projektionsgeräte, um eine einheitliche Darstellung auf einer Bildwand zu erzielen.
- Über die Lebensdauer der Lampen ändert sich der für den Projektionsapparat ausnutzbare Lichtstrom der Lampen. Dieser Alterungsprozeß ist zudem lampenabhängig. Dies erfordert einen wiederholten Helligkeitsabgleich der Projektionsapparate.
- Die Toleranzen der Lampen können zu unterschiedlichen Ausleuchtungsverteilungen auf dem Bildgeber führen, die sich auch während des Alterungsprozesses der Lampen verändern können.
- Die spektrale Zusammensetzung des von den Lampen emittierten Lichtes zeigt Toleranzen, die einen Farbabgleich der Projektionsgeräte erfordern.
- Die spektrale Zusammensetzung des von den Lampen emittierten Lichtes ändert sich über die Lebenszeit der Lampe. Dies erfordert einen wiederholten Farbabgleich der Projektionsapparate.
- Je nach Typ der verwendeten Entladungslampe wird der Lichtstrom zur Stabilisierung der Lage des Entladungsbogens zeitlich moduliert. Dies führt im Zusammenhang mit der zeitsequentiellen Farbmischung und auch der digitalisierten Erzeugung von Helligkeitsstufen (Pulse Code Modulation eines DMD) zu Interferenzen. Um dadurch entstehende Bildartefakte zu unterdrücken, muß die zeitabhängigkeit des Lichtstroms überwacht werden.
- Auch Herstellungstoleranzen der sonstigen optischen Komponenten führen zu Schwankungen des Lichtflusses auf der Projektionsfläche, was einen Helligkeitsabgleich der Projektionsapparate erforderlich macht.

Zur Lösung dieser hohen technischen Anforderungen werden nach dem Stand der Technik verschiedene, aufwendige Methoden eingesetzt, die jedoch die genannten Probleme nicht vollständig lösen:
- Die Lampen werden in hohem Maße selektiert, um minimale, nicht weiter unterschreitbare Fertigungstoleranzen zu überwinden. Dies ist aufwendig und mit hohen Kosten verbunden.
- Während der Installation eines Projektionsapparates bzw. einer Bildwand und/oder in festen Serviceintervallen wird ein Abgleich (Helligkeit und/oder Farbe) durchgeführt. Dabei wird die Helligkeitsverteilung auf dem Bildschirm vermessen und/oder ein Farbabgleich mittels einer Vermessung der Primärfarben und des Weißpunktes auf dem Bildschirm durchgeführt. Dies ist aufwendig und kostenintensiv, erfordert geschultes Personal und bedingt eine Unterbrechung des laufenden Betriebes. Zwischen den Serviceintervallen kann sich die Bildqualität verschlechtern.
- Im Falle eines DMDs als Bildgeber wird gemäß dem Dokument US 5,796,508 ein Sensor zum Nachweis des im Off-Zustandes reflektierten Lichtes verwendet. Dieser Nachweis des Lichtes im Off-Zustand mittels eines Sensors muß über einen Eingriff auf den Bildinhalt erzwungen werden. Durch das Erzwingen des Off-Zustandes kommt es zu einer Veränderung bzw. zu Störungen des sichtbaren Bildes, so daß kein den Bildinhalt nicht störender Dauerbetrieb möglich ist.
- Es wird ein Sensor außerhalb des optischen Pfades zum Nachweis von Streulicht eingesetzt. Der Nachweis von Streulicht hat jedoch den Nachteil einer nicht ausreichenden Korrelation zwischen dem Meßsignal und der tatsächlichen Bildhelligkeit. Aufgrund des so entstehenden Kalibrierfehlers zeigen die Module einer Bildwand nach wie vor sichtbare Helligkeitsunterschiede.
- Die Berücksichtigung der auf Erfahrungswerten beruhenden mittleren Änderung des Lichtstromes während der Betriebsdauer. Die Abweichung einzelner Lampen von einer mittleren zeitabhängigen Lichtstromänderung sind jedoch so groß, daß sie ohne individuelle Korrektur zu sichtbaren Bildartefakten führen.
- Eine Bestimmung des Lichtstromes durch eine Messung der Lampenleistung mittels elektrischer Messung von Lampenstrom und Lampenspannung. Aber nur ein kleiner Teil der verfügbaren Lampentreiber erlaubt eine derartige elektrische Messung, und die elektrische Leistung der Lampen ist nicht vollständig mit dem resultierenden Lichtfluß des Projektors korreliert.
- Eine manuelle Eingabe einer zu berücksichtigenden zeitabhängigen Lichtstromänderung durch die Benutzer. Dies erfordert jedoch eine entsprechende Schulung des Benutzers und die Aufschaltung spezieller Bildinhalte, wodurch der Dauerbetrieb gestört wird.
- Eine Farbkorrektur durch Regelung der Lampenleistung gemäß dem Dokument WO 95/11572 zur Stabililsierung der optischen Leistung des Projektors. Eine derartige Regelung der Lampenleistung bedeutet, daß die Lampe mit variierender elektrischer Leistung betrieben würde. Dies zieht bei den üblicherweise verwendeten Hochleistungs-Entladungslampen eine unerwünschte Veränderung des Farbtones und eine Verkürzung der Lebensdauer der Lampe nach sich, was sich insbesondere für den Dauereinsatz in Bildwänden nachteilig auswirkt.

Aus dem Dokument DE 198 19 245 C1 ist ein Videoprojektor bekannt, bei dem zwischen der Lichtquelle und dem Bildgeber zwei Umlenkspiegel und zwischen den Umlenkspiegeln eine stabförmige Lichtmischeinrichtung angeordnet sind. Er umfaßt ein dynamisches Farbfilter zur zeitsequentiellen Mischung primärer Farben. Ein Helligkeits- oder Farbabgleich ist bei der bekannten Vorrichtung nicht vorgesehen.

Das Dokument US 6,422,704 B1 offenbart einen Projektor mit drei dichroitischen Spiegeln und jeweils einem zugehörigen Bildgeber. Für den Projektoräbgleich kann ein halbdurchlässiger Spiegel in den Strahlengang zwischen Lampe und Bildgeber geschwenkt, werden, der von der Bildwand reflektiertes Licht, das durch das Projektionsobjektiv und die Bildgeber in Richtung zur Lampe zurückgestreut wird, auf einen Sensor auskoppelt, der die Intensität dieses reflektierten Lichts für Einstellzwecke nutzt. Die so gewonnenen Meßdaten bedürfen aufgrund des mehrfachen Durchlaufens der optischen Komponenten aufwendiger numerischer Korrekturen, so daß unter Berücksichtigung üblicher Fertigungstoleranzen nur eine äußerst eingeschränkte Meßgenauigkeit erzielt wird. Ferner muß das Reflexionsverhalten des Bildschirmes bekannt sein, so daß eine Verwendung beliebiger Projektionsschirme nicht möglich ist. Darüber hinaus kann das bekannte Verfahren nicht während des laufenden Betriebs des Projektors durchgeführt werden.

In dem Dokument WO 95/11572 ist ein Projektor mit einem Farbrad beschrieben. Ein Signalgenerator steuert den Lampenstrom, wobei dieser mit der Position der Farbsegmente des Farbrades synchronisiert wird. Der Abgleich der Lampenströme erfolgt manuell durch den Nutzer. Es handelt sich also um eine einmalige Einstellung. Optional ist zum Regeln der Farbbalance ein Regelkreis mit einem Sensor vorgesehen, ohne daß offenbart ist, wo der Sensor angeordnet ist und welche Größe er mißt.

Aus dem Dokument US 2002/0140910 A1 ist ein ähnlicher Projektor bekannt, bei dem ein Fotosensor zum Synchronisieren des Farbrades mit dem Lampentreiber verwendet wird. Es handelt sich dabei ebenfalls um eine einmalige Einstellung, ohne daß eine Regelung mittels des Signals des Fotosensors erfolgt. Der Fotosensor ist nicht im Strahlengang angeordnet, sondern erfaßt Streulicht von der Lichtmischeinrichtung, und es werden damit nur Zeitdaten zum Synchronisieren der Bilderzeugung gewonnen, ohne daß eine Regelung des Farbortes des projizierten Bildes möglich ist.

Aus dem Dokument EP 0 757 278 A2 ist ein als "ray-shaper" zu bezeichnendes Gerät aus dem Bereich der Bühnenbeleuchtungstechnik bekannt, mit dem kein hoch aufgelöstes Bild, sondern nur ein einfaches Muster mit geringen Pixelzahlen als Strahlenmuster projiziert werden kann. Das Dokument bezieht sich somit nicht auf die Bildprojektion, sondern auf die Lichtprojektion. Dementsprechend ist dort weder ein dynamisches Farbfilter zur zeitsequentiellen Mischung primärer Farben noch eine räumliche Lichtmischeinrichtung zum Ausgleichen örtlicher Unterschiede in der Helligkeitsverteilung vorgesehen. Es ist ein intensitätsmessender Sensor vorgesehen, dieser wird aber nur dann verwendet, wenn kein Bild erzeugt wird, das heißt nur bei der Erzeugung eines monochromen Strahlenmusters. Die Positionierung des Sensors ist in dem Dokument nicht offenbart.

Aus dem erst nach dem Prioritätstag der vorliegenden Anmeldung veröffentlichten Dokument WO 2004/030372 A1 ist ein Auflichtprojektionsapparat bekannt, bei dem zum Kompensieren von Bogensprüngen einer Entladungslampe im Zusammenhang mit einer zeitsequentiellen Erzeugung des Farbbildes eine zeitaufgelöste Messung des Lichtstromes vorgeschlagen wird. Hierzu wird ein Sensor verwendet, der in der Mittenposition einer Linse angeordnet wird. Nachteilig hierbei ist, daß von dem Sensor aus geometrischen Gründen nur ein kleiner Anteil des Lichtes erfaßt wird, der Sensor zu Schattenbildungen und Inhomogenitäten führen kann und die Korrelation zwischen Sensorsignal und Bildhelligkeit gering ist, insbesondere bei Verschiebungen der geometrischen Lichtverteilung in Folge der Alterung der Lampe.

Der Erfindung liegt unter Berücksichtigung dieses Standes der Technik die Aufgabe zugrunde, eine zufriedenstellende Lösung für den Helligkeits- und/oder Farbabgleich bei eingangs genannten Projektionsapparaten durchzuführen. Diese Aufgabe wird erfindungsgemäß durch einen Projektionsapparat mit den Merkmalen des beigefügten unabhängigen Vorrichtungsanspruch bzw. durch ein Verfahren mit den Merkmalen des beigefügten unabhängigen Verfahrensanspruch gelöst. Bevorzugte Ausgestaltungen und Weiterbildungen der Erfindung ergeben sich aus den abhängigen Ansprüchen und der nachfolgenden Beschreibung mit zugehörigen Zeichnungen.

Mittels der Erfindung ist eine zuverlässige, individuelle Toleranzen und Alterungsprozesse berücksichtigende Regelung der Helligkeit und/oder der Farbe des projizierten Bildes in relativ einfacher Weise möglich. Die von dem Sensor ermittelte Intensität wird dem digitalen Bildprozessor zugeführt, der diese Werte bei der Ansteuerung des Bildgebers berücksichtigt, um eine gleichmäßige Helligkeit bzw. Farbe zu erzielen.

Besondere praktische Vorteile der Erfindung ergeben sich daraus, daß die Messung kontinuierlich durchgeführt werden kann, so daß ein Regelkreis mit einer kontinuierlichen Regelung ermöglicht wird. Ferner ist es vorteilhaft, daß keine zusätzlichen Meßgeräte oder Einsätze geschulten Personals erforderlich sind, weil der Abgleich automatisch im laufenden Betrieb erfolgen kann. Aus diesem Grund ist auch keine Störung oder Unterbrechung des laufenden Betriebes erforderlich, und auch bei der Verwendung von Beleuchtungseinrichtungen mit einem Doppellampenmodul zur Gewährleistung des unterbrechungsfreien Betriebs im Fall des Ausfalls einer Lampe durch Umschalten auf die zweite Lampe ist der Abgleich sofort möglich.

Ein besonderer Vorteil der Erfindung besteht darin, daß mittels der Regeleinrichtung das projizierte Bild im laufenden Betrieb des Projektionsapparates regelbar ist, d.h. unabhängig vom Bildinhalt, ohne Unterbrechung oder Störung des laufenden Betriebes, ohne daß ein Testbild projiziert werden muß und daß eine Messung des Lichtes nur auf der Beleuchtungsseite des Bildgebers erforderlich ist. Dieser Vorteil wird insbesondere erzielt, wenn das Auskoppelelement auch während der Projektion eines Bildes auf einen Projektionsschirm im Beleuchtungspfad angeordnet ist bzw. wenn es ständig im Beleuchtungspfad angeordnet ist.

Mit der Erfindung werden somit Ziele erreicht, um die die Fachwelt sich schon lange bemüht hat. Um dabei besonders gute Ergebnisse erzielen zu können, werden bevorzugt die nachfolgenden Maßnahmen einzeln oder in Kombination miteinander eingesetzt.

Als Bildgeber bei der zeitsequentiellen additiven Farbmischung wird bevorzugt ein Digital-Micromirror-Device (DMD) verwendet. Es sind aber auch andere, beispielsweise eingangs genannte Bildgeber im Rahmen der Erfindung verwendbar.

Das dynamische Filter zur zeitsequentiellen Erzeugung von Primärfarben ist vorteilhäfterweise ein Farbrad. Andere, derzeit oder künftig verfügbare entsprechende Einrichtungen können jedoch im Rahmen.der Erfindung ebenfalls verwendet werden.

Zur Erzielung einer homogenen oder homogenisierten Ausleuchtung ist es vorteilhaft, wenn der Projektionsapparat eine räumliche Lichtmischeinrichtung zum Ausgleichen örtlicher Unterschiede in der Helligkeitsverteilung umfaßt. Bevorzugt kommt hierbei eine räumliche Lichtmischeinrichtung zum Eininsatz, die sich in Ausbreitungsrichtung des Lichtes erstreckt, insbesondere ein Lichtmischstab. Lichtmischstäbe sind im Stand der Technik bekannt.

Bekannte Ausführungsformen umfassen z.B. Hohlmischstäbe (siehe z.B. US 5,625,738) und Vollmischstäbe (siehe z.B. DE 10103099 A1).

Weitere vorteilhafte Ausgestaltungen bestehen darin, daß das Auskoppelelement im Beleuchtungspfad zwischen der Beleuchtungseinrichtung und dem Bildgeber angeordnet ist, vorzugsweise zwischen dem Ausgang der räumlichen Lichtmischeinrichtung und dem Bildgeber. Hier ist die günstigste Stelle zur Gewinnung der erforderlichen Information über die Intensität und spektrale Zusammensetzung des Lichtes.

Das Auskoppelelement kann auf verschiedene Weise realisiert werden. Eine vorteilhafte Ausführungsform ist ein teildurchlässiger, vorzugsweise farbneutraler Spiegel, der zur Vermeidung hoher Lichtverluste vorteilhafterweise weniger als 5%, vorzugsweise weniger als 2% des Lichtes zu dem Sensor auskoppelt.

Der Sensor kann ein einfacher Sensor sein, der ein bloßes Helligkeitssignal liefert, das eine integrale Information über die Beleuchtung des Bildgebers beinhaltet. In anderen Ausführungsformen kann zur Gewinnung einer Information über die Homogenität der Ausleuchtung des Bildgebers ein zweidimensional ortsauflösender Sensor bzw. zur Gewinnung einer spektralen Information der Sensor ein spektral auflösender Sensor sein. Alle drei Sensorausführungen können mit dem dynamischen Farbfilter zur Trennung der Primärfarbanteile synchronisiert sein.

Die Erfindung wird nachfolgend anhand eines in den Figuren dargestellten Ausführungsbeispiels näher erläutert. Darin beschriebene Besonderheiten können einzeln oder in Kombination miteinander eingesetzt werden, um bevorzugte Ausgestaltungen der Erfindung zu schaffen. Es zeigen:
- Fig. 1: eine schematische Darstellung von Komponenten eines erfindungsgemäßen Projektionsapparates,
- Fig. 2: Einzelheiten zu Fig. 1,
- Fig. 3: eine Abwandlung zu Fig. 2,
- Fig. 4: ein TIR-Prisma ohne Rückreflektion,
- Fig. 5: ein TIR-Prisma mit Rückreflektion,
- Fig. 6: ein Farbrad,
- Fig. 7: den zeitlichen Verlauf der Sensorsignale zu Fig. 6,
- Fig. 8: Sensor-Steuerpulse zu Fig. 7,
- Fig. 9: den zeitlichen Verlauf der Intensität einer Entladungslampe mit Stabilisierungspuls,
- Fig. 10: den zeitlichen Verlauf des Sensorsignals zu Fig. 9 und
- Fig. 11: Sensor-Steuerpulse zu Fig. 10.

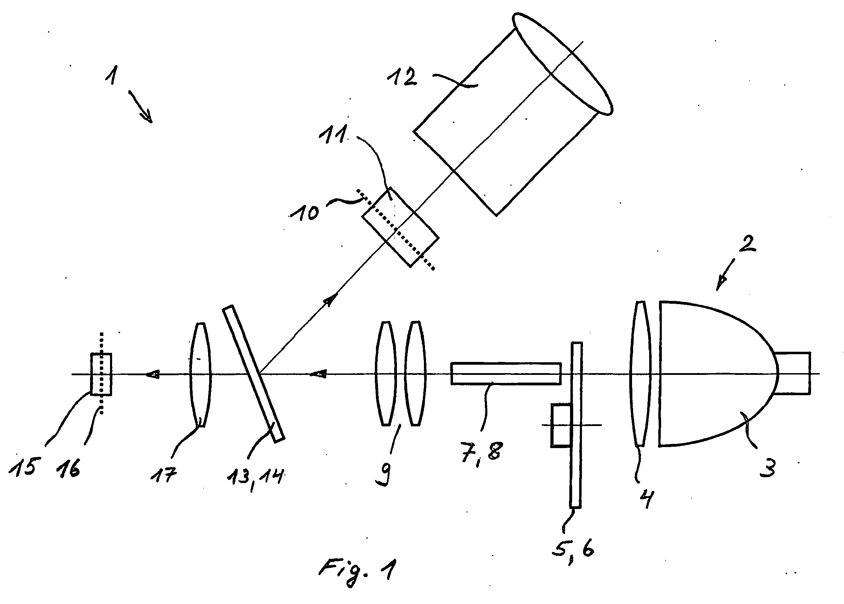

Fig. 1 zeigt die optischen Komponenten eines erfindungsgemäßen Projektionsapparates 1. Er umfaßt eine Beleuchtungseinheit 2 mit einer Lampe 3 als Lichtquelle, vorzugsweise einer Entladungslampe, und einer Kondensoroptik 4. Im Strahlengang folgt ein dynamisches Farbfilter 5 in Form eines Farbrades 6 und eine räumliche Lichtmischeinrichtung 7 in Form eines sich in Ausbreitungsrichtung des Lichtes erstreckenden Lichtmischstabes 8. Das am Lichtmischstab 8 austretende Licht wird mittels einer Abbildungsoptik 9, die auch als Relay-Optik bezeichnet wird, in die Ausleuchtungsebene 10 eines Bildgebers 11 abgebildet.

Das von dem Bildgeber 11 erzeugte Bild wird mittels eines Projektionsobjektives 12 einer Projektionseinrichtung vergrößert auf einen nicht dargestellten Projektionsschirm abgebildet, projiziert also das vom Bildgeber 11 in Transmission oder Reflektion erzeugte Bild auf einen nicht dargestellten Projektionsschirm. In einem bevorzugten Anwendungsfall der Erfindung ist der Projektionsapparat 1 ein Rückprojektionsapparat, und das von dem Projektionsobjektiv 12 projizierte Bild ist ein Teilbild einer mehrere Projektionsapparate oder Rückprojektionsapparate enthaltenden Bildwand.

Das projizierte Bild wird mittels des Verfahrens der zeitsequentiellen Mischung aus aufeinanderfolgenden monochromen Teilbildern in den Primärfarben rot, grün und blau aufgebaut. Die Sequenz kann auch ein viertes Teilbild in schwarz/weiß enthalten, daß zur Erhöhung der Bildhelligkeit zugemischt wird. Die Sequenz der Teilbilder folgt in einer ausreichend hohen Geschwindigkeit, so daß das Auge dem Farbwechsel nicht folgen kann und eine physiologische Farbmischung stattfindet.

Das Farbrad 6 dient dazu, aus dem weißen Licht der Lampe 3 die Primärfarben rot, grün und blau zur Ausleuchtung des Bildgebers 11 zu erzeugen. Der Bildgeber 11 ist vorzugsweise ein DMD. Bei entsprechender Synchronisierung kann der Bildgeber 11 die monochromen Teilbilder erzeugen, die von dem Auge des Betrachters des projizierten Bildes zusammengesetzt werden.

Das Licht der Lampe 3 wird mittels der Kondensoroptik 4 auf den Eintritt des Lichtmischstabes 8 fokussiert. Das sich drehende Farbrad 6 weist unterschiedlich farbige Segmente in den Primärfarben auf, die je nach Drehstellung des Farbrades 6 die Spektralanteile der Lampe 3 entsprechend dem gerade im Strahlengang befindlichen Farbfilter transmittieren. Der Lichtmischstab 8 sorgt für eine Homogenisierung der Ausleuchtung, und die Abbildungsoptik 9 bildet die Lichtverteilung am Ausgang des Lichtmischstabes 8 auf den Bildgeber 11 ab.

Die Grundhelligkeit des projizierten Bildes, d.h. die Helligkeit eines Bildes bei vollweißem Bildinhalt, hängt von der Leuchtdichte am Ort des Bildgebers 11 ab. Aufgrund der eingangs genannten Probleme ist es daher gewünscht, die Leuchtdichte am Ort des Bildgebers 11 zu kennen. Ferner kommt es durch Alterungsprozesse der Lampe 3 zu Verschiebungen der Intensitätsverhältnisse zwischen den Spektralanteilen der Primärfarben. Infolge dessen ändert sich der Farbton der weißen Mischfarbe im Laufe der Zeit, d.h. über einen Zeitraum von mehreren Stunden oder Tagen. Eine Messung der spektralen Zusammensetzung des Lichtes und eine daraus abgeleitete Korrektur der Farbmischung, so daß effektiv keine Verschiebung des Weißpunktes feststellbar ist, wird daher ebenfalls angestrebt. Beide Aspekte können mit der erfindungsgemäßen Ausbildung eines Projektionsapparates 1 erzielt werden.

Hierzu ist erfindungsgemäß ein optisches Auskoppelelement 13 zum Auskoppeln eines Teils des von der Beleuchtungseinheit 2 zur Beleuchtung des Bildgebers 11 erzeugten Lichtstromes vorgesehen, wobei mittels des Auskoppelelements Licht für den Sensor 15 aus dem Strahlengang auf dem Weg von der Beleuchtungseinheit 2 zum Bildgeber 11 ausgekoppelt wird. Vorzugsweise ist das Auskoppelelement 13 im Beleuchtungspfad zwischen der Lampe 3 und dem Bildgeber 11 angeordnet, insbesondere zwischen dem Ausgang der räumlichen Lichtmischeinrichtung 7 und dem Bildgeber 11. In Fig. 1 ist das Auskoppelelement 13 ein teildurchlässiger, vorzugsweise farbneutraler Spiegel 14, der vorzugsweise weniger als 5% und bevorzugt weniger als 2% des Lichtes auskoppelt. Der Transmissionsgrad ist also vorzugsweise kleiner als 5% und bevorzugt kleiner als 2% und die Reflektivität vorzugsweise größer als 95% und bevorzugt größer als 98%.

Das von dem Spiegel 14 ausgekoppelte Licht wird von einem Sensor 15 gemessen, so daß die von dem Sensor 15 gemessene Intensität ein Maß für die Intensität der Beleuchtung des Bildgebers 11 ist. Das Signal des Sensors 15 kann also einer Regeleinrichtung zugeführt werden, mittels der die Helligkeit des projizierten Bildes durch Ansteuerung des Bildgebers 11 in Abhängigkeit von dem Signal des Sensor 15 geregelt wird. Wenn der Sensor 15 auf die jeweils aktiven Farbsegmente des Farbrades 6 synchronisiert wird, läßt sich auch die Intensität der Primärfarben messen. Diese Information steht dann der Elektronik des Projektionsapparates 1 zur Verfügung, und mittels geeigneter Algorithmen läßt sich aus dem Meßsignal des Sensors 15 eine Korrektur der Farbmischung durchführen, so daß bei einer Änderung der spektralen Zusammensetzung des von der Lampe 3 emittierten Lichtes effektiv keine Verschiebung des Weißpunktes des projizierten Bildes feststellbar ist.

Mit der Regeleinrichtung kann jedoch nicht nur der Bildgeber 11 angesteuert werden. Alternativ oder zusätzlich kann vorgesehen sein, daß die Beleuchtungs-Lichtmenge auf andere Weise von der Regeleinrichtung in Abhängigkeit von dem Signal des Sensors 15 geregelt wird. Hierfür kommen alle bekannten und geeigneten Methoden in Betracht.

Eine besonders vorteilhafte Ausbildung zur Regelung der Beleuchtungs-Lichtmenge kann darin bestehen, daß ein variabler Intensitätsabschwächer verwendet wird, der in unmittelbarer Nähe der Fokalabene eines fokussierenden Lampenreflektors angeordnet ist. Weitere Einzelheiten dieser Ausbildung sind in der gleichzeitig eingereichten internationalen Patentanmeldung der Anmelderin (Titel "Helligkeitsregelung eines Projektionsapparates", Anwaltszeichen SEC 109/0A/WO) beschrieben.

Um eine Grundeinstellung oder Grundkalibrierung des Projektionsapparates 1 zu erzielen, kann vorgesehen sein, daß Ausgangswerte der spektralen Eigenschaften der Beleuchtungsquelle bzw. der Lampe 3 der Beleuchtungseinheit, des dynamischen Farbfilters 5 und des Sensors 15 sowie gegebenenfalls der räumlichen Lichtmischeinrichtung 7, des Abbildungsobjektives 9 und des optischen Auskoppelelements 13 vermessen und von der Regeleinrichtung berücksichtigt werden. Eine solche Vermessung von Ausgangswerten kann beispielsweise bei der Installation des Projektionsapparates 1, während einer Servicemaßnahme oder im Falle eines Lampentausches durchgeführt werden.

Um eine möglichst hohe Korrelation der räumlichen Lichtverteilung am Sensor 15 und der Ausleuchtungsebene 10 des Bildgebers 11 zu erzielen, wird nach einem vorteilhaften Merkmal vorgeschlagen, daß der Sensor 15 in einer optischen Ebene angeordnet ist, die zu der Ausleuchtungsebene 10 des Bildgebers 11 korrespondiert, d.h. daß die Ausleuchtungsebene 10 des Bildgebers 11 und die Ausleuchtungsebene 16 des Sensors 15 optisch korrespondieren, wobei sie nach einem zusätzlichen bevorzugten Merkmal das Abbild des Ausgangs der räumlichen Lichtmischeinrichtung 7 enthalten.

Die einfachste Lösung zur Realisierung dieser Merkmale bestünde darin, den Sensor in gleicher optischer Entfernung zu dem Spiegel 14 zu positionieren wie den Bildgeber 11. Um einen kompakteren Aufbau des Projektionsapparates 1 zu erzielen, ist nach einem zusätzlichen vorteilhaften Merkmal eine Sensoroptik 17 vorgesehen. Sie hat eine positive Brechkraft und erzeugt eine verkleinerte Abbildung des Ausgangs des Lichtmischstabes 8 bei verkürzter optischer Lauflänge. Ferner ist es dadurch möglich, die Bildgröße des Lichtmischstabes 8 auf die Größe des Sensors 15 anzupassen, so daß auf dem Sensor 15 ein verkleinertes Abbild des Ausleuchtungsmusters des Bildgebers 11 erzeugt wird.

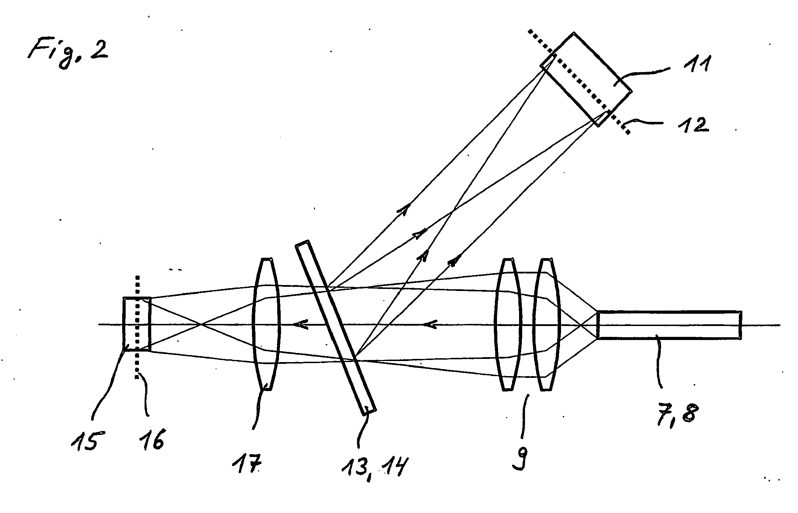

Die Figur 2 zeigt Einzelheiten des Strahlenganges aus Figur 1. Wenn der Sensor 2 ein einfacher, unstrukturierter, ein Helligkeitssignal liefernder Sensor ist, kann mit ihm die integrale Helligkeit und integrale spektrale Zusammensetzung des Lichtes vermessen werden. Wird dagegen ein ortsauflösender Sensor 15, beispielsweise ein CCD verwendet, kann auch die Homogenität der Ausleuchtung, d.h. die Homogenität der Helligkeit des auf den Bildschirm projizierten Bildes vermessen werden. Gemäß einer anderen oder zusätzlichen Ausbildung kann der Sensor 15 auch ein spektral auflösender Sensor sein.

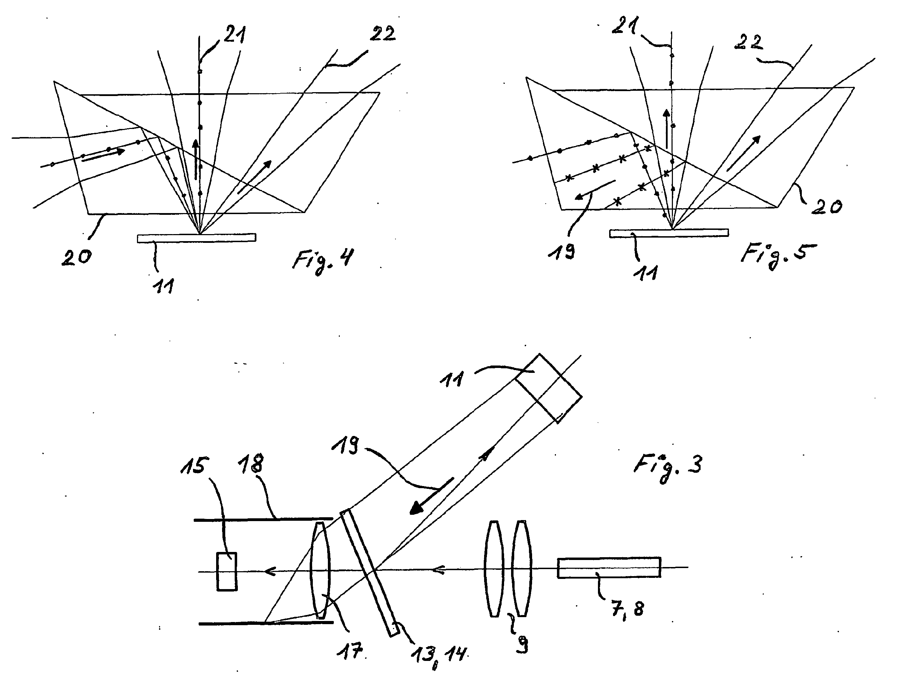

In Figur 3 ist ein der Figur 2 entsprechender Aufbau dargestellt, der zusätzlich eine den Sensor 15 umgebende Abschirmung 18 umfaßt. Um eine störungsfreie Funktionsweise des Sensors 15 und der aus seinen Signalen abgeleiteten Regelung des Bildgebers 11 zu ermöglichen, ist es vorteilhaft, wenn das von dem Sensor 15 nachgewiesene Signal weitestgehend unabhängig von äußeren Einflüssen wie zum Beispiel Umgebungslicht ist. Dies läßt sich durch die Abschirmung 18 erreichen. Daneben wird auch die Unabhängigkeit von dem momentan projizierten Bildinhalt gefordert.

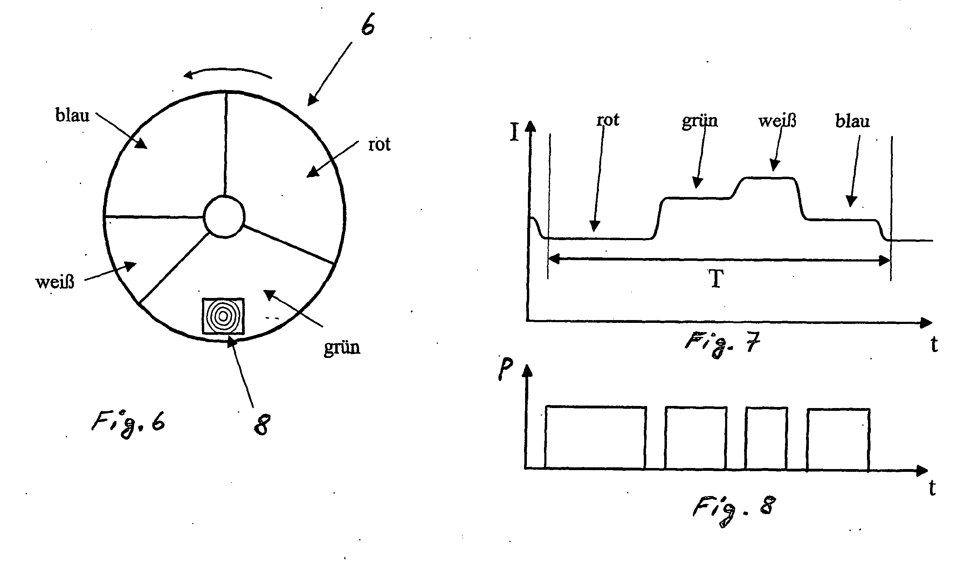

Dies ist allerdings nicht automatisch erfüllt, wie anhand der Figuren 4 und 5 am Beispiel eines Bildgebers 11 in Form eines DMD mit einem TIR-Prisma 20 dargestellt ist. TIR steht für "Total Internal Reflection"; zu näheren Einzelheiten wird auf das Dokument US 5,552,922 verwiesen. Das TIR-Prisma 20 dient der einfachen räumlichen Trennung zwischen einfallendem Licht und vom DMD reflektierten Licht. Die Trennung beider Komponenten erfolgt dabei durch die im unteren Prisma auftretende Totalreflexion. Das einfallende Licht wird total reflektiert und das vom DMD reflektierte Licht erfüllt die Bedingung zur Totalreflexion gerade nicht mehr. Es transmittiert zur Kompensation optische Aberrationen durch das zweite Teilprisma.

Der Durchgang des ON-Zustandes 21 durch die beiden Grenzflächen am Luftspalt zwischen beiden Prismenhälften ist allerdings trotz Antireflexionsbeschichtung stets mit Fresnellschen Verlusten verbunden. Dies bedeutet, daß ein Teil des Lichts des ON-Zustandes 21 zurück in Richtung des Lichtmischstabes 8 reflektiert wird. Für den Off-Zustand 22 ist dagegen dieser Effekt weitaus schwächer, und zwar aus geometrischen Gründen und aufgrund der Tatsache, daß die auftretenden Winkel zwischen Lichtrichtung und Grenzfläche deutlich weiter von dem Winkel der Totalreflexion entfernt sind als für den ON-Zustand 21. Die Fresnellschen Verluste sind also geringer.

Die rückreflektierte Lichtmenge hängt also vom Bildinhalt ab; bei einem dunklen Bild wird weniger Licht zurückreflektiert und bei einem hellen Bild mehr. Vergleichbare Rückreflexionen 19 können auch bei anderen Bauarten von Bildgebern, beispielsweise bei Flüssigkristallanzeigen, auftreten.

Wenn in Figur 3 der Sensor 15 ohne eine vorgeschaltete Sensoroptik 17 in unmittelbarer Nähe hinter dem Spiegel 14 angeordnet wäre, wäre eine Trennung zwischen vorwärts verlaufendem Licht und Rückreflexionen 19 nicht möglich. Die Sensoroptik 17 dient in diesem Fall also nicht nur der Abbildung des Lichtmischstabes 8 auf den Sensor 15, sondern zusammen mit der Abschirmung 18 auch der Unterdrückung von Störungen des Sensors 15 infolge von Rückreflexionen 19 vom Bildgeber 11. Die Rückreflexionen 19 werden dabei durch die Sensoroptik 17 auf eine Stelle außerhalb des Sensors 15 abgebildet und absorbiert.

Bei dem bisher beschriebenen Aufbau eines erfindungsgemäßen Projektionsapparates 1 ergibt sich ein Meßsignal des Sensors 15, das sich synchron zur Rotation des Farbrades 6 ändert. Dies erklärt sich durch die für die Primärfarben unterschiedliche Empfindlichkeit des Sensors 15. Die Figur 6 veranschaulicht ein typisches Farbrad 6 für einen DMD- bzw. DLP-Projektionsapparat mit einer typischen Farbradsequenz rot-grün-weiß-blau. Die Lage des Eingangs des Lichtmischstabes 8 auf dem Farbrad 6 und die Ausleuchtung des Lichtmischstabes 8 sind in Figur 6 ebenfalls veranschaulicht.

Die Farben rot und blau ergeben dabei typischerweise ein schwächeres Signal, weiß das stärkste. Im Übergangsbereich zwischen den einzelnen Segmenten des Farbrades 6 ergibt sich ein Abfall bzw. Anstieg des Signales zum nächsten Signalniveau hin. In Figur 7 ist der Verlauf des Sensorsignals I als Funktion der Zeit t während einer Periode T des Farbrades 6 dargestellt. Die sich dabei ergebende Kantensteilheit hängt von dem optischen Design des Projektionsapparates, d.h. dem Abstand des Farbrades 6 zum Brennpunkt und der Größe des Brennpunkts ab.

Um eine undefinierte Auswertung der Signale des Sensors 15 zu vermeiden, ist es vorteilhaft, wenn der Sensor 15 stets nur während eines Segmentes des Farbrades 6 aktiviert ist, d.h. daß der Sensor 15 mittels eines Taktsignals des dynamischen Farbfilters 5 so gesteuert wird, daß er die zu den Primärfarben und eventuellen farbneutralen Anteilen gehörende Lichtintensitäten getrennt ermittelt. Dies kann in der Weise durchgeführt werden, daß Zeitmeßfenster definiert werden, die den Beitrag aus mehreren Segmenten und aus den Übergangsbereichen unterdrücken. Dies ist durch eine Gate- und Delay-Elektronik möglich, die ihrerseits durch den Taktgeber des Farbrades 6 bzw. des dynamischen Farbfilters 5 synchronisiert wird. Auf diese Weise lassen sich in Figur 8 dargestellte Sensor-Steuerpulse P erzeugen, die synchron zum Auftreten der entsprechenden Farbsegmente verlaufen.

Nach einem weiteren vorteilhaften Merkmal kann vorgesehen sein, daß die Intensität des von der Beleuchtungseinheit 2 erzeugten Lichtes zeitlich veränderlich ist und die Auswertung der Signale des Sensors 15 diese zeitliche Veränderung berücksichtigt oder erfaßt. Eine derartige zeitliche Veränderung der Intensität kann beispielsweise auf einem der Lampe 3 der Beleuchtungseinheit 2 zugeführten Stabilisierungspuls beruhen, so daß die Intensitätsänderung der Lampe 3 aufgrund des Stabilisierungspulses mittels des Sensors 15 erfaßt und in der Regeleinrichtung berücksichtigt wird.

Insbesondere bei Entladungslampen ist es bekannt, mittels des Lampentreibers einen kurzzeitigen Anstieg des Lampenstromes auszulösen. Dies erfolgt typischerweise mit einer Pulsrate von 50 bis 250 Hertz und ist somit in dem projizierten Bild nicht sichtbar. Die Stabilisierungspulse dienen der Stabilisierung der örtlichen Lage des Entladungsbogens in der Entladungslampe und damit der Stabilisierung der räumlichen Helligkeitsverteilung des projizierten Bildes.

Allerdings muß die Dauer der Stabilisierungspulse und ihre Höhe bzw. die von ihnen verursachte Intensitätsänderung der Lampe bei der sequentiellen Bilderzeugung berücksichtigt und korrigiert werden. Bei der Berechnung der Farbmischung müssen diese Parameter dem Bildgeber 11 bzw. dessen Ansteuerelektronik bekannt sein, damit sie berücksichtigt und korrigiert werden können.

In der Praxis stellt sich jedoch zumeist das Problem, daß nur die Dauer der Stabilisierungspulse innerhalb geringer Schwankungsgrenzen eine fest definierte Größe ist. Die durch die Stabilisierungspulse ausgelöste Intensitätsänderung der Lampe 3 unterliegt dagegen größeren produktionstechnischen Schwankungen und zeigt während des Alterungsprozesses einer Lampe 3 eine deutliche Änderung. Daraus resultiert die Notwendigkeit einer kontinuierlichen Messung der Peakintensität Iₚₖ der Lampe 3 bezogen auf die Plateauintensität Iₚₗ der Lampe 3 außerhalb eines Stabiliserungspulses.

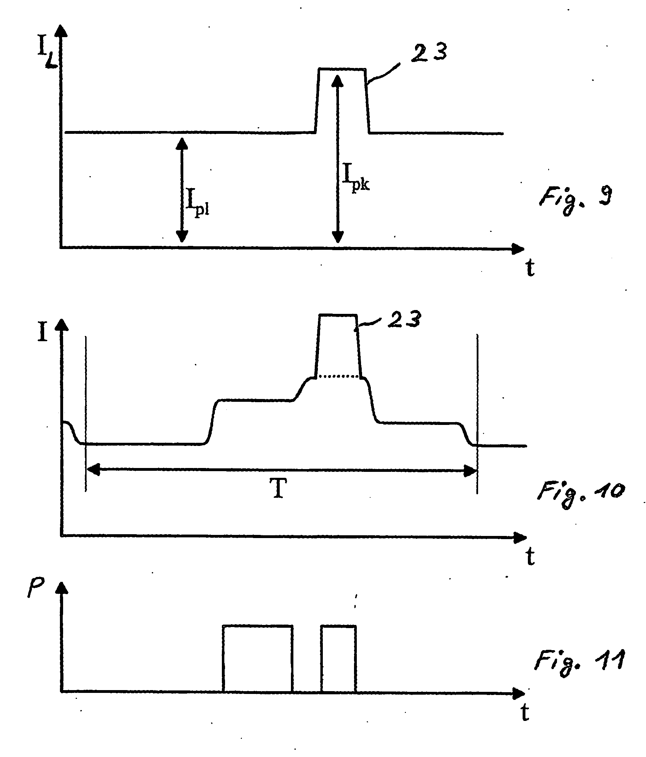

In Figur 9 ist dargestellt, wie sich die Intensität I_{L} der Lampe 3 beim Anlegen eines Stabilisierungspulses 23 ändert. In Figur 10 ist entsprechend dazu die Änderung des Sensorsignals I veranschaulicht. Dabei wird angenommen, daß der Stabilisierungspuls 23 mit der Drehung des Farbrades 6 synchronisiert ist, so daß der Stabilisierungspuls 23 genau im farbneutralen Weißsegment erscheint. Durch die erhöhte Lichtintensität zeigt das Sensorsignal I an der entsprechenden Stelle eine Überhöhung gegenüber dem Signal, das sich ohne Stabilisierungspuls 23 ergeben würde.

Eine kontinuierliche Messung des Verhältnisses Iₚₖ/Iₚₗ während eines längeren Zeitraums der Alterung der Lampe 3, beispielsweise im Abstand von Stunden oder Tagen, kann nun beispielsweise mittels der Messungen der Sensorsignale I während des Grünsegmentes und während des Stabilisierungspulses 23 erfolgen. Es ergibt sich Iₚₖ/Iₚₗ = k·I_{Weißpuls}/I_{grün}, wobei die Konstante k = I_{grün}/I_{weiß} einmalig mit den gleichen zeitlichen Meßfenstern, aber ohne Stabilisierungspuls 23 bestimmt wird. Sie enthält die spektrale Empfindlichkeit des Sensors 15 und die spektralen Eigenschaften des Farbrades 6 sowie der restlichen optischen Komponenten.

Die auf diese Weise gewonnenen Informationen kann die Regeleinrichtung zum Steuern des Bildgebers 11 zur Erzielung einer gleichmäßigen Helligkeit und/oder eines konstanten Farbortes berücksichtigen. Dies ist gegenüber einer nach dem Stand der Technik bekannten festen Vorgabe eines bestimmten Wertes für den Einfluß des Stabilisierungspulses 23 genauer.

### Bezugszeichenliste

- 1: Projektionsapparat
- 2: Beleuchtungseinheit
- 3: Lampe
- 4: Kondensoroptik
- 5: Dynamisches Farbfilter
- 6: Farbrad
- 7: räumliche Lichtmischeinrichtung
- 8: Lichtmischstab
- 9: Abbildungsoptik
- 10: Ausleuchtungsebene zu 11
- 11: Bildgeber
- 12: Projektionsobjektiv
- 13: optisches Auskoppelelement
- 14: Spiegel
- 15: Sensor
- 16: Ausleuchtungsebene zu 15
- 17: Sensoroptik
- 18: Abschirmung
- 19: Rückreflexionen
- 20: TIR-Prisma
- 21: ON-Zustand
- 22: Off-Zustand
- 23: Stabilisierungspuls

- I: Sensorsignal
- I_{L}: Lampenintensität
- Iₚₖ: Peakintensität
- Iₚₗ: Plateauintensität
- P: Sensor-Steuerpuls
- T: Periode
- t: Zeit

## Patentansprüche

1. Rückprojektionsapparat (1) zum Projizieren eines Bildes auf einen Projektionsschirm, umfassend
einen pixelweise steuerbaren Bildgeber (11) zum Darstellen des Bildes in einem verkleinerten Maßstab,
eine Beleuchtungseinheit (2) zum Beleuchten des Bildgebers (11) und
eine ein Projektionsobjektiv (12) umfassende Projektionseinrichtung zum vergrößerten Abbilden des von dem Bildgeber (11) dargestellten Bildes auf den Projektionsschirm, wobei
die Beleuchtungseinheit (2) ein dynamisches Farbfilter (5) zur zeitsequentiellen Mischung primärer Farben umfaßt,
eine räumliche Lichtmischeinrichtung (7) zum Ausgleichen örtlicher Unterschiede in der Helligkeitsverteilung,
ein optisches Auskoppelelement (13) zum Auskoppeln eines Teils des von der Beleuchtungseinheit (2) zur Beleuchtung des Bildgebers (11) erzeugten Lichtstromes, und
einen Sensor (15) zum Messen der Intensität des von dem optischen Auskoppelelement (13) ausgekoppelten Lichtes, wobei die von dem Sensor (15) gemessene Intensität ein Maß für die Intensität der Beleuchtung des Bildgebers (11) ist,
**dadurch gekennzeichnet, daß**
wenn der Sensor (15) auf die jeweils aktiven Farbsegmente des dynamischen Farbfilters (5) synchronisiert wird, sich mit dem Sensor (15) die Intensität der primären Farben messen läßt,
das Auskoppelelement (13) im Beleuchtungspfad zwischen der Beleuchtungseinheit (2) und dem Bildgeber (11) angeordnet ist, wobei das Auskoppelelement (13) zwischen dem Ausgang der räumlichen Lichtmischeinrichtung (7) und dem Bildgeber (11) angeordnet ist,
das Auskoppelelement (13) Licht aus dem Strahlengang auf dem Weg von der Beleuchtungseinheit (2) zum Bildgeber (11) auskoppelt, wobei das Auskoppelelement (13) Licht aus dem Strahlengang auf dem Weg von dem Ausgang der Lichtmischeinrichtung (7) zum Bildgeber (11) auskoppelt,
das Licht im Beleuchtungspfad zwischen dem Ausgang der räumlichen Lichtmischeinrichtung (7) und dem Bildgeber (11) durch das Auskoppelelement (13) umgelenkt wird,
der Rückprojektionsapparat (1) eine Regeleinrichtung umfaßt, mittels der die Farbe des projizierten Bildes durch Ansteuerung des Bildgebers (11) oder durch Steuerung der Beleuchtungs-Lichtmenge in Abhängigkeit von dem Signal (I) des Sensors (15) geregelt wird, und
die Regeleinrichtung einen Algorithmus verwendet, um aus der gemessenen Intensität der primären Farben eine Korrektur der Farbmischung durchzuführen.

2. Rückprojektionsapparat (1) nach Anspruch 1, **dadurch gekennzeichnet, daß** mittels der Regeleinrichtung auch die Helligkeit des projizierten Bildes durch Ansteuerung des Bildgebers (11) oder durch Steuerung der Beleuchtungs-Lichtmenge in Abhängigkeit von dem Signal (I) des Sensors (15) geregelt wird.

3. Rückprojektionsapparat (1) nach einem der vorhergehenden Ansprüche, **dadurch gekennzeichnet, daß** der Sensor (15) ein nicht spektral auflösender Sensor (15) ist, der ein Helligkeitssignal liefert, das eine integrale Information über die Beleuchtung des Bildgebers (11) beinhaltet.

4. Rückprojektionsapparat (1) nach einem der vorhergehenden Ansprüche, **dadurch gekennzeichnet, daß** der Bildgeber (11) ein Digital-Micromirror-Device (DMD) ist.

5. Rückprojektionsapparat (1) nach einem der vorhergehenden Ansprüche, **dadurch gekennzeichnet, daß** das dynamische Farbfilter (5) ein sich drehendes Farbrad (6) ist.

6. Rückprojektionsapparat (1) nach dem vorhergehenden Anspruch, **dadurch gekennzeichnet, daß** die räumliche Lichtmischeinrichtung (7) eine sich in Ausbreitungsrichtung des Lichtes erstreckende Vorrichtung, insbesondere ein Lichtmischstab (8) ist.

7. Rückprojektionsapparat (1) nach einem der vorhergehenden Ansprüche, **dadurch gekennzeichnet, daß** das Auskoppelelement (13) auch während der Projektion eines Bildes auf einen Projektionsschirm im Beleuchtungspfad angeordnet ist.

8. Rückprojektionsapparat (1) nach einem der vorhergehenden Ansprüche, **dadurch gekennzeichnet, daß** das Auskoppelelement (13) ständig im Beleuchtungspfad angeordnet ist.

9. Rückprojektionsapparat (1) nach einem der vorhergehenden Ansprüche, **dadurch gekennzeichnet, daß** das Auskoppelelement (13) ein teildurchlässiger Spiegel (14) ist.

10. Rückprojektionsapparat (1) nach einem der vorhergehenden Ansprüche, **dadurch gekennzeichnet, daß** durch das Auskoppelelement (13) weniger als 5%, vorzugsweise weniger als 2% des Lichtes ausgekoppelt wird.

11. Rückprojektionsapparat nach einem der vorhergehenden Ansprüche, **dadurch gekennzeichnet, daß** das Auskoppelelement einen Transmissionsgrad von weniger als 5% und eine Reflektivität von mehr als 95% aufweist.

12. Rückprojektionsapparat (1) nach einem der vorhergehenden Ansprüche, **dadurch gekennzeichnet, daß** der Sensor (15) in einer optischen Ebene angeordnet ist, die zu der Ausleuchtungsebene (10) des Bildgebers (11) korrespondiert.

13. Rückprojektionsapparat (1) nach dem vorhergehenden Anspruch, **dadurch gekennzeichnet, daß** die korrespondierenden Ebenen ein Abbild des Ausgangs der räumlichen Lichtmischeinrichtung (7) enthalten.

14. Rückprojektionsapparat (1) nach einem der vorhergehenden Ansprüche, **dadurch gekennzeichnet, daß** er eine Sensoroptik (17) umfaßt, mittels der auf dem Sensor (15) ein verkleinertes Abbild des Ausleuchtungsmusters des Bildgebers (11) erzeugt wird.

15. Rückprojektionsapparat (1) nach einem der vorhergehenden Ansprüche, **dadurch gekennzeichnet, daß** der Sensor (15) ein Sensor ist, der ein Helligkeitssignal liefert.

16. Rückprojektionsapparat (1) nach einem der vorhergehenden Ansprüche, **dadurch gekennzeichnet, daß** der Sensor (15) ein zweidimensional ortsauflösender Sensor ist.

17. Rückprojektionsapparat (1) nach einem der vorhergehenden Ansprüche, **dadurch gekennzeichnet, daß** der Sensor (15) ein spektral auflösender Sensor ist.

18. Rückprojektionsapparat (1) nach einem der vorhergehenden Ansprüche, **dadurch gekennzeichnet, daß** der Sensor (15) mittels eines Taktsignales des dynamischen Farbfilters (5) so gesteuert wird, daß er die zu den Primärfarben und eventuellen farbneutralen Anteilen gehörenden Lichtintensitäten getrennt ermittelt.

19. Rückprojektionsapparat (1) nach einem der vorhergehenden Ansprüche, **dadurch gekennzeichnet, daß** die Intensität (I_{L}) des von der Beleuchtungseinheit (2) erzeugten Lichtes zeitlich veränderlich ist und die Auswertung der Signale (I) des Sensors (15) diese zeitliche Veränderung berücksichtigt.

20. Rückprojektionsapparat (1) nach dem vorhergehenden Anspruch, **dadurch gekennzeichnet, daß** die zeitliche Veränderung der Intensität (I_{L}) auf einem der Lampe (3) der Beleuchtungseinheit (2) zugeführten Stabilisierungspuls (23) beruht und die Intensitätsänderung der Lampe (3) aufgrund des Stabilisierungspulses (23) mittels des Sensors (15) erfaßt und berücksichtigt wird.

21. Rückprojektionsapparat (1) nach einem der vorhergehenden Ansprüche, **dadurch gekennzeichnet, daß** er eine den Sensor (15) umgebende Abschirmung (18) umfaßt, mittels der Rückreflexionen (19) vom Bildgeber (11) zu dem Sensor (15) unterdrückt werden.

22. Rückprojektionsapparat (1) nach einem der vorhergehenden Ansprüche, **dadurch gekennzeichnet, daß** er zur Regelung der Beleuchtungs-Lichtmenge einen variablen Intensitätsabschwächer umfaßt, der in unmittelbarer Nähe der Fokalebene einer Kondensoroptik (4) oder der Fokalebene eines fokussierenden Lampenreflektors angeordnet ist.

23. Rückprojektionsapparat (1) nach einem der vorhergehenden Ansprüche, **dadurch gekennzeichnet, daß** mittels der Regeleinrichtung das projizierte Bild im laufenden Betrieb des Rückprojektionsapparates (1) regelbar ist.

24. Rückprojektionsapparat (1) nach einem der vorhergehenden Ansprüche, **dadurch gekennzeichnet, daß** die Beleuchtungseinheit (2) eine Entladungslampe umfaßt.

25. Bildwand, enthaltend mehrere Rückprojektionsapparate (1) nach einem der vorhergehenden Ansprüche.

26. Verfahren zum Regeln der Farbe des projizierten Bildes eines Rückprojektionsapparates (1) zum Projizieren des Bildes auf einen Projektionsschirm, umfassend
einen pixelweise steuerbaren Bildgeber (11) zum Darstellen des Bildes in einem verkleinerten Maßstab,
eine Beleuchtungseinheit (2) zum Beleuchten des Bildgebers (11) und
eine ein Projektionsobjektiv (12) umfassende Projektionseinrichtung zum vergrößerten Abbilden des von dem Bildgeber (11) dargestellten Bildes auf den Projektionsschirm, wobei
die Beleuchtungseinheit (2) ein dynamisches Farbfilter (5) zur zeitsequentiellen Mischung primärer Farben umfaßt,
eine räumliche Lichtmischeinrichtung (7) zum Ausgleichen örtlicher Unterschiede in der Helligkeitsverteilung,
bei dem mittels eines optischen Auskoppelelements (13) ein Teil des von der Beleuchtungseinheit (2) zur Beleuchtung des Bildgebers (11) erzeugten Lichtstromes ausgekoppelt wird, und
bei dem durch einen Sensor (15) die Intensität des von dem optischen Auskoppelelement (13) ausgekoppelten Lichtes gemessen wird, wobei die von dem Sensor (15) gemessene Intensität ein Maß für die Intensität der Beleuchtung des Bildgebers (11) ist,
**dadurch gekennzeichnet, daß**
wenn der Sensor (15) auf die jeweils aktiven Farbsegmente des dynamischen Farbfilters (5) synchronisiert wird, mit dem Sensor (15) die Intensität der primären Farben gemessen wird,
mittels des Auskoppelelements (13) Licht für den Sensor (15) aus dem Strahlengang auf dem Weg von der Beleuchtungseinheit (2) zum Bildgeber (11) ausgekoppelt wird, wobei das Auskoppelelement (13) zwischen dem Ausgang der räumlichen Lichtmischeinrichtung (7) und dem Bildgeber (11) angeordnet wird,
mittels des Auskoppelelements (13) Licht aus dem Strahlengang auf dem Weg von der Lichtmischeinrichtung (7) zum Bildgeber (11) ausgekoppelt wird, wobei das Auskoppelelement (13) Licht aus dem Strahlengang auf dem Weg von dem Ausgang der Lichtmischeinrichtung (7) zum Bildgeber (11) auskoppelt,
das Licht im Beleuchtungspfad zwischen dem Ausgang der räumlichen Lichtmischeinrichtung (7) und dem Bildgeber (11) durch das Auskoppelelement (13) umgelenkt wird,
mittels einer Regeleinrichtung in Abhängigkeit von dem Signal (I) des Sensors (15) der Bildgeber (11) geregelt angesteuert oder die Beleuchtungs-Lichtmenge geregelt wird, und
die Regeleinrichtung einen Algorithmus verwendet, um aus der gemessenen Intensität der primären Farben eine Korrektur der Farbmischung durchzuführen.

27. Verfahren nach Anspruch 26, **dadurch gekennzeichnet, daß** es ein Merkmal eines Rückprojektionsapparates (1) nach einem der Ansprüche 2 bis 24 umfaßt.

## Claims

1. A rear projection apparatus (1) for projecting an image onto a projection screen, comprising
an imaging device (11) that can be controlled pixel by pixel and is provided for representing the image at a reduced scale,
an illumination unit (2) for illuminating the imaging device (11), and
a projection assembly comprising a projection lens (12) and provided for imaging the image represented by the imaging device (11) enlarged on the projection screen, wherein
the illumination unit (2) comprises
a dynamic colour filter (5) for time-sequential mixing of primary colours,
a spatial light mixing system (7) for compensating local differences in brightness distribution,
an optical outcoupling element (13) for coupling out a part of the luminous flux generated by the illumination unit (2) for illuminating the imaging device (11), and
a sensor (15) for measuring the intensity of the light coupled out by the optical outcoupling element (13), wherein the intensity measured by the sensor (15) is a measure for the illumination intensity of the imaging device (11),
**characterized in that**
the intensity of the primary colours can be measured by means of the sensor (15) if this sensor (15) is synchronized with the actually active colour segments of the dynamic colour filter (5),
the outcoupling element (13) is arranged in the illumination path between the illumination unit (2) and the imaging device (11), wherein the outcoupling element (13) is arranged between the output of the spatial light mixing system (7) and the imaging device (11),
the outcoupling element (13) couples light out of the light path on its way from the illumination unit (2) to the imaging device (11), wherein the outcoupling element (13) couples light out of the light path on its way from the output of the light mixing system (7) to the imaging device (11),
the light in the illumination path between the output of the spatial light mixing system (7) and the imaging device (11) is deflected by the outcoupling element (13),
the rear projection apparatus (1) comprises a control unit which can be used to control the colour of the projected image by controlling the imaging device (11) or by controlling the quantity of illumination light in relation to the signal (I) of the sensor (15), and
the control unit uses an algorithm to correct the colour mixture on the basis of the measured intensity of the primary colours.

2. Rear projection apparatus (1) according to claim 1, **characterized in that** the control unit can also be used to control the brightness of the projected image by controlling the imaging device (11) or by controlling the quantity of illumination light in relation to the signal (I) of the sensor (15).

3. Rear projection apparatus (1) according to any one of the preceding claims, **characterized in that** the sensor (15) is a sensor without spectral resolution which provides a brightness signal comprising integral information about the illumination of the imaging device (11).

4. Rear projection apparatus (1) according to any one of the preceding claims, **characterized in that** the imaging device (11) is a Digital Micromirror Device (DMD).

5. Rear projection apparatus (1) according to any one of the preceding claims, **characterized in that** the dynamic colour wheel (5) is a revolving colour wheel (6).

6. Rear projection apparatus (1) according to the preceding claim, **characterized in that** the spatial light mixing system (7) is a device, more particularly a light mixing rod (8), extending in the direction of light propagation.

7. Rear projection apparatus (1) according to any one of the preceding claims, **characterized in that** the outcoupling element (13) is arranged in the illumination path even while an image is projected onto a projection screen.

8. Rear projection apparatus (1) according to any one of the preceding claims, **characterized in that** the outcoupling element (13) is arranged permanently in the illumination path.

9. Rear projection apparatus (1) according to any one of the preceding claims, **characterized in that** the outcoupling element (13) is a semi-transparent mirror (14).

10. Rear projection apparatus (1) according to any one of the preceding claims, **characterized in that** the outcoupling element (13) couples out less than 5 percent, preferably less than 2 percent of the light.

11. Rear projection apparatus (1) according to any one of the preceding claims, **characterized in that** the outcoupling element (13) has a transmission degree of less than 5 percent and a reflectivity of more than 95 percent.

12. Rear projection apparatus (1) according to any one of the preceding claims, **characterized in that** the sensor (15) is arranged in an optical plane which corresponds with the illumination plane (10) of the imaging device (11).

13. Rear projection apparatus (1) according to the preceding claim, **characterized in that** the corresponding planes contain an image of the output of the spatial light mixing system (7).

14. Rear projection apparatus (1) according to any one of the preceding claims, **characterized in that** it comprises a sensor optics (17) which is used to generate on the sensor (15) a reduced image of the illumination pattern of the imaging device (11).

15. Rear projection apparatus (1) according to any one of the preceding claims, **characterized in that** the sensor (15) is a sensor that supplies a brightness signal.

16. Rear projection apparatus (1) according to any one of the preceding claims, **characterized in that** the sensor (15) is a sensor with a two-dimensional local resolution.

17. Rear projection apparatus (1) according to any one of the preceding claims, **characterized in that** the sensor (15) is a sensor with spectral resolution.

18. Rear projection apparatus (1) according to any one of the preceding claims, **characterized in that** the sensor (15) is controlled by means of a clock signal of the dynamic colour filter (5) such that it determines the light intensities pertaining to the primary colours and to the possible colour-neutral portions separately.

19. Rear projection apparatus (1) according to any one of the preceding claims, **characterized in that** the intensity (I_{L}) of the light generated by the illumination unit (2) can be varied over time and that this variation over time is considered in the evaluation of the signals (I) of the sensor (15).

20. Rear projection apparatus (1) according to the preceding claim, **characterized in that** the variation over time in the intensity (I_{L}) is based on a stabilization pulse (23) supplied to the lamp (3) of the illumination unit (2) and that the change in intensity of the lamp (3) caused by the stabilization pulse (23) is registered and considered by the sensor (15) .

21. Rear projection apparatus (1) according to any one of the preceding claims, **characterized in that** it comprises a shielding (18) that surrounds the sensor (15) and is used to suppress retroreflections (19) from the imaging device (11) to the sensor (15).

22. Rear projection apparatus (1) according to any one of the preceding claims, **characterized in that**, in order to control the quantity of illumination light, it comprises a variable intensity reducer which is arranged in the immediate vicinity of the focal plane of a condenser system (4) or the focal plane of a focusing lamp reflector.

23. Rear projection apparatus (1) according to any one of the preceding claims, **characterized in that** the control unit can be used to control the projected image during running operation of the rear projection apparatus (1).

24. Rear projection apparatus (1) according to any one of the preceding claims, **characterized in that** the illumination unit (2) comprises a gas discharge lamp.

25. A projection wall, comprising a plurality of rear projection apparatuses (1) according to any one of the preceding claims.

26. A method for controlling the colour of the projected image of a rear projection apparatus (1) that is provided for projecting an image onto a projection screen, comprising
an imaging device (11) that can be controlled pixel by pixel and is provided for representing the image at a reduced scale,
an illumination unit (2) for illuminating the imaging device (11), and
a projection assembly comprising a projection lens (12) and provided for imaging the image represented by the imaging device (11) enlarged on the projection screen, wherein
the illumination unit (2) comprises a dynamic colour filter (5) for time-sequential mixing of primary colours,
a spatial light mixing system (7) for compensating local differences in brightness distribution,
wherein by means of an optical outcoupling element (13) a part of the luminous flux generated by the illumination unit (2) for illuminating the imaging device (11) is coupled out,
wherein by means of a sensor (15) the intensity of the light coupled out by the optical outcoupling element (13) is measured, wherein the intensity measured by the sensor (15) is a measure for the illumination intensity of the imaging device (11),
**characterized in that**
the intensity of the primary colours is measured by means of the sensor (15) if this sensor (15) is synchronized with the actually active colour segments of the dynamic colour filter (5),
by means of the outcoupling element (13) light is coupled out for the sensor (15) of the light path on its way from the illumination unit (2) to the imaging device (11), wherein the outcoupling element (13) is arranged between the output of the spatial light mixing system (7) and the imaging device (11),
by means of the outcoupling element (13) light is coupled out of the light path on its way from the light mixing system (7) to the imaging device (11), wherein the outcoupling element (13) couples light out of the light path on its way from the output of the light mixing system (7) to the imaging device (11),
the light in the illumination path between the output of the spatial light mixing system (7) and the imaging device (11) is deflected by the outcoupling element (13),
by means of a control unit the imaging device (11) or the quantity of illumination light can be controlled in relation to the signal (I) of the sensor (15), and
the control unit uses an algorithm to correct the colour mixture on the basis of the measured intensity of the primary colours.

27. Method according to claim 26, **characterized in that** it comprises a feature of a rear projection apparatus (1) according to any one of claims 2 to 24.

## Revendications

1. Appareil de rétroprojection (1) servant à projeter une image sur un écran de projection, comprenant
un générateur d'images (11) pouvant être commandé pixel par pixel pour représenter l'image à une échelle réduite,
une unité d'éclairage (2) pour éclairer le générateur d'images (11) et
un dispositif de projection comprenant un objectif de projection (12) pour la reproduction agrandie de l'image représentée par le générateur d'images (11) sur l'écran de projection,
l'unité d'éclairage (2) comprenant un filtre chromatique dynamique (5) pour le mélange séquentiel de couleurs primaires,
un dispositif mélangeur de lumière spatial (7) pour compenser des différences locales dans la répartition de luminosité,
un élément de découplage optique (13) pour découpler une partie du flux lumineux généré par l'unité d'éclairage (2) pour éclairer le générateur d'images (11), et
un capteur (15) pour mesurer l'intensité de la lumière découplée par l'élément de découplage optique (13), l'intensité mesurée par le capteur (15) donnant une mesure de l'intensité de l'éclairage du générateur d'images (11),
**caractérisé en ce que**
quand le capteur (15) est synchronisé sur le segment coloré actif du filtre chromatique dynamique (5), le capteur (15) permet de mesurer l'intensité des couleurs primaires,
l'élément de découplage (13) est disposé dans le chemin d'éclairage entre l'unité d'éclairage (2) et le générateur d'images (11), l'élément de découplage (13) étant disposé entre la sortie du dispositif mélangeur de lumière spatial (7) et le générateur d'images (11),
l'élément de découplage (13) découple de la lumière du trajet des rayons sur le chemin de l'unité d'éclairage (2) vers le générateur d'images (11), l'élément de découplage (13) découplant de la lumière du trajet des rayons sur le chemin de la sortie du dispositif mélangeur de lumière (7) vers le générateur d'images (11),
la lumière dans le chemin d'éclairage entre la sortie du dispositif mélangeur de lumière spatial (7) et le générateur d'images (11) est déviée par l'élément de découplage (13),
l'appareil de rétroprojection (1) comprend un dispositif de réglage au moyen duquel la couleur de l'image projetée est réglée par commande du générateur d'images (11) ou par commande de la quantité de lumière d'éclairage en fonction du signal (I) du capteur (15), et
le dispositif de réglage utilise un algorithme pour effectuer une correction du mélange de couleurs à partir de l'intensité des couleurs primaires mesurée.

2. Appareil de rétroprojection (1) selon la revendication 1, **caractérisé en ce que** l'on règle aussi au moyen du dispositif de réglage la luminosité de l'image projetée par commande du générateur d'images (11) ou par commande de la quantité de lumière d'éclairage en fonction du signal (I) du capteur (15).

3. Appareil de rétroprojection (1) selon l'une des revendications précédentes, **caractérisé en ce que** le capteur (15) est un capteur (15) non à résolution spectrale qui fournit un signal de luminosité qui contient une information intégrée sur l'éclairage du générateur d'images (11).

4. Appareil de rétroprojection (1) selon l'une des revendications précédentes, **caractérisé en ce que** le générateur d'images (11) est un Digital Micromirror Device (DMD).

5. Appareil de rétroprojection (1) selon l'une des revendications précédentes, **caractérisé en ce que** le filtre chromatique dynamique (5) est une roue chromatique tournante (6).

6. Appareil de rétroprojection (1) selon l'une des revendications précédentes, **caractérisé en ce que** le dispositif mélangeur de lumière spatial (7) est un dispositif s'étendant dans la direction de propagation de la lumière, en particulier une barre mélangeuse de lumière (8).

7. Appareil de rétroprojection (1) selon l'une des revendications précédentes, **caractérisé en ce que** l'élément de découplage (13) est disposé dans le chemin d'éclairage aussi pendant la projection d'une image sur un écran de projection.

8. Appareil de rétroprojection (1) selon l'une des revendications précédentes, **caractérisé en ce que** l'élément de découplage (13) est disposé en permanence dans le chemin d'éclairage.

9. Appareil de rétroprojection (1) selon l'une des revendications précédentes, **caractérisé en ce que** l'élément de découplage (13) est un miroir partiellement transparent (14).

10. Appareil de rétroprojection (1) selon l'une des revendications précédentes, **caractérisé en ce que** l'élément de découplage (13) découple moins de 5 %, de préférence moins de 2 % de la lumière.

11. Appareil de rétroprojection (1) selon l'une des revendications précédentes, **caractérisé en ce que** l'élément de découplage (13) présente un degré de transmission inférieur à 5 % et une réflectivité supérieure à 95 %.

12. Appareil de rétroprojection (1) selon l'une des revendications précédentes, **caractérisé en ce que** le capteur (15) est disposé dans un plan optique qui correspond au plan d'illumination (10) du générateur d'images (11).

13. Appareil de rétroprojection (1) selon l'une des revendications précédentes, **caractérisé en ce que** les plans correspondants contiennent une image de la sortie du dispositif mélangeur de lumière spatial (7).

14. Appareil de rétroprojection (1) selon l'une des revendications précédentes, **caractérisé en ce qu'**il comprend une optique de capteur (17) au moyen de laquelle une image en réduction du motif d'illumination du générateur d'images (11) est générée sur le capteur (15).

15. Appareil de rétroprojection (1) selon l'une des revendications précédentes, **caractérisé en ce que** le capteur (15) est un capteur qui fournit un signal de luminosité.

16. Appareil de rétroprojection (1) selon l'une des revendications précédentes, **caractérisé en ce que** le capteur (15) est un capteur à résolution locale bidimensionnelle.

17. Appareil de rétroprojection (1) selon l'une des revendications précédentes, **caractérisé en ce que** le capteur (15) est un capteur à résolution spectrale.

18. Appareil de rétroprojection (1) selon l'une des revendications précédentes, **caractérisé en ce que** le capteur (15) est commandé au moyen d'un signal de synchronisation du filtre chromatique dynamique (5) de façon qu'il détermine séparément les intensités lumineuses appartenant aux portions de couleurs primaires et à d'éventuelles composantes de couleur neutre.

19. Appareil de rétroprojection (1) selon l'une des revendications précédentes, **caractérisé en ce que** l'intensité (I_{L}) de la lumière générée par l'unité d'éclairage (2) est variable dans le temps et l'évaluation des signaux (I) du capteur (15) prend en compte cette variation dans le temps.

20. Appareil de rétroprojection (1) selon l'une des revendications précédentes, **caractérisé en ce que** la variation dans le temps de l'intensité (I_{L}) est basée sur une impulsion de stabilisation (23) amenée à la lampe (3) de l'unité d'éclairage (2) et la variation d'intensité de la lampe (3) du fait de l'impulsion de stabilisation (23) est saisie et prise en compte au moyen du capteur (15).

21. Appareil de rétroprojection (1) selon l'une des revendications précédentes, **caractérisé en ce qu'**il comprend un blindage (18) entourant le capteur (15) au moyen duquel des rétroréflexions (19) du générateur d'images (11) vers le capteur (15) sont supprimées.

22. Appareil de rétroprojection (1) selon l'une des revendications précédentes, **caractérisé en ce qu'**il comprend pour le réglage de la quantité de lumière d'éclairage un affaiblisseur d'intensité variable qui est disposé à proximité immédiate du plan focal d'une optique condensatrice (4) ou du plan focal d'un réflecteur de lampe focalisant.

23. Appareil de rétroprojection (1) selon l'une des revendications précédentes, **caractérisé en ce que** l'image projetée est réglable au moyen du dispositif de réglage en cours de fonctionnement de l'appareil de rétroprojection (1).

24. Appareil de rétroprojection (1) selon l'une des revendications précédentes, **caractérisé en ce que** l'unité d'éclairage (2) comprend une lampe à décharge.

25. Ecran ou mur d'images, contenant plusieurs appareils de rétroprojection (1) selon l'une des revendications précédentes.

26. Procédé pour régler la couleur de l'image projetée par un appareil de rétroprojection (1) servant à projeter l'image sur un écran de projection, comprenant
un générateur d'images (11) pouvant être commandé pixel par pixel pour représenter l'image à une échelle réduite,
une unité d'éclairage (2) pour éclairer le générateur d'images (11) et
un dispositif de projection comprenant un objectif de projection (12) pour la reproduction agrandie de l'image représentée par le générateur d'images (11) sur l'écran de projection,
l'unité d'éclairage (2) comprenant un filtre chromatique dynamique (5) pour le mélange séquentiel de couleurs primaires,
un dispositif mélangeur de lumière spatial (7) pour compenser des différences locales dans la répartition de luminosité,
dans lequel une partie du flux lumineux généré par l'unité d'éclairage (2) pour éclairer le générateur d'images (11) est découplée au moyen d'un élément de découplage optique (13), et
dans lequel un capteur (15) mesure l'intensité de la lumière découplée par l'élément de découplage optique (13), l'intensité mesurée par le capteur (15) donnant une mesure de l'intensité de l'éclairage du générateur d'images (11),
**caractérisé en ce que**
quand le capteur (15) est synchronisé sur le segment coloré actif du filtre chromatique dynamique (5), l'intensité des couleurs primaires est mesurée avec le capteur (15),
au moyen de l'élément de découplage (13), de la lumière pour le capteur (15) est découplée du trajet des rayons sur le chemin de l'unité d'éclairage (2) vers le générateur d'images (11), l'élément de découplage (13) étant disposé entre la sortie du dispositif mélangeur de lumière spatial (7) et le générateur d'images (11),
au moyen de l'élément de découplage (13), de la lumière est découplée du trajet des rayons sur le chemin du dispositif mélangeur de lumière (7) vers le générateur d'images (11), l'élément de découplage (13) découplant de la lumière du trajet des rayons sur le chemin de la sortie du dispositif mélangeur de lumière (7) vers le générateur d'images (11),
la lumière dans le chemin d'éclairage entre la sortie du dispositif mélangeur de lumière spatial (7) et le générateur d'images (11) est déviée par l'élément de découplage (13),
le générateur d'images (11) est commandé par réglage ou la quantité de lumière d'éclairage réglée au moyen d'un dispositif de réglage en fonction du signal (I) du capteur (15), et
le dispositif de réglage utilise un algorithme pour effectuer une correction du mélange de couleurs à partir de l'intensité des couleurs primaires mesurée.

27. Procédé selon la revendication 26, **caractérisé en ce qu'**il comprend une caractéristique d'un appareil de rétroprojection (1) selon l'une des revendications 2 à 24.
